# EUROPÄISCHE PATENTANMELDUNG

(11) **EP 4 825 614 A1**
(43) Veröffentlichungstag der Anmeldung: **21.10.2026**
(21) Anmeldenummer: 26171163.4
(22) Anmeldetag: 08.04.2026
(51) Int. Cl.: B60D 1/24, B60D 1/06, B60D 1/48, B60D 1/54

(54) **ANHÄNGEKUPPLUNG MIT EINER SCHWINGUNGSDÄMPFERANORDNUNG**

(30) Priorität: 15.04.2025 DE 102025114798; 31.03.2026 DE 102026113255
(71) Anmelder: WESTFALIA - Automotive GmbH, 33378 Rheda-Wiedenbrück (DE)
(72) Erfinder: Stockhaus, Tim, 33378 Rheda-Wiedenbrück (DE); Bahraoui, Nabil, 33378 Rheda-Wiedenbrück (DE); Brummel, Christian, 33378 Rheda-Wiedenbrück (DE)
(74) Vertreter: Patentanwälte Bregenzer und Reule Partnerschaftsgesellschaft mbB

(57) **Zusammenfassung**

Die Erfindung betrifft eine Anhängekupplung (10) für ein Kraftfahrzeug (200), mit einem Kupplungsarm (11) zum Ankuppeln eines Anhängers oder eines Hecklastenträgers, mit einer an dem Kraftfahrzeug (200) befestigbaren oder befestigten Fahrzeughalterung (70), die eine Lagerbasis (23) aufweist, an der der Kupplungsarm (11) angeordnet oder anordenbar ist, wobei die Anhängekupplung (10) mindestens eine mechanisch bewegliche Bewegungskomponente (100) aufweist, wobei die Bewegungskomponente (100) insbesondere einen Bestandteil einer Fixiereinrichtung (40) zur ortsfesten Fixierung des Kupplungsarmes (11) bezüglich der Fahrzeughalterung (70) und/oder eines Lagers und/oder Antriebs zum Verstellen des Kupplungsarmes (11) bezüglich der Lagerbasis (23) zwischen einer zum Anhängen eines Anhängers geeigneten Gebrauchsstellung (G) und einer für den Nichtgebrauch des Kupplungsarmes (11) vorgesehenen Nichtgebrauchsstellung (N) bildet, wobei die Bewegungskomponente (100) bei ihrer Bewegung mindestens eine Komponente der Anhängekupplung (10) zu akustische Wellen erzeugenden Schwingungen anregt, sodass diese Komponente eine Schwingungskomponente (110) bildet. Es ist vorgesehen, dass an einem Anbringungsort (113, 114) der Schwingungskomponente (110) eine Schwingungsdämpferanordnung (150, 160) mit mindestens einem Dämpferelement (151A, 151B, 161) zur Dämpfung der Schwingungen in Bezug auf mindestens eine Schwingungsfrequenz (FS1, FS2) angeordnet ist.

## Beschreibung

Die Erfindung betrifft eine Anhängekupplung für ein Kraftfahrzeug, mit einem Kupplungsarm zum Ankuppeln eines Anhängers oder eines Hecklastenträgers, mit einer an dem Kraftfahrzeug befestigbaren oder befestigten Fahrzeughalterung, die eine Lagerbasis aufweist, an der der Kupplungsarm angeordnet oder anordenbar ist, wobei die Anhängekupplung mindestens eine mechanisch bewegliche Bewegungskomponente aufweist, wobei die Bewegungskomponente insbesondere einen Bestandteil einer Fixiereinrichtung zur ortsfesten Fixierung des Kupplungsarmes bezüglich der Fahrzeughalterung und/oder eines Lagers und/oder Antriebs zum Verstellen des Kupplungsarmes bezüglich der Lagerbasis zwischen einer zum Anhängen eines Anhängers geeigneten Gebrauchsstellung und einer für den Nichtgebrauch des Kupplungsarmes vorgesehenen Nichtgebrauchsstellung bildet, wobei die Bewegungskomponente bei ihrer Bewegung mindestens eine Komponente der Anhängekupplung zu akustische Wellen erzeugenden Schwingungen anregt, sodass diese Komponente eine Schwingungskomponente bildet.

Die Bewegungskomponente ist beispielsweise ein Bolzenelement der Fixiereinrichtung, welches direkt im Sinne einer ortsfesten Verriegelung des Kupplungsarmes bezüglich der Lagerbasis wirkt, ein Formschlusskörper, zum Beispiel eine Kugel, der Fixiereinrichtung, der bei einem Fixieren des Kupplungsarmes in Bezug auf die Lagerbasis auf ein Widerlager auftrifft, beispielsweise eine Formschlusskontur, eine Formschlussaufnahme oder dergleichen.

Der Kupplungsarm kann auch bezüglich der Lagerbasis verstellbar, beispielsweise schwenkbar sein, insbesondere zwischen der Gebrauchsstellung und der Nichtgebrauchsstellung, wobei ein solcher Schwenkvorgang, insbesondere wenn er motorisch angetrieben ist, wenn ein den Kupplungsarm tragender Kupplungsarmträger an einer Endposition anschlägt oder dergleichen, eine Komponente der Anhängekupplung, zum Beispiel einen Rohrkörper oder dergleichen, zu unerwünschten Schwingungen anregen, insbesondere in unerwünschten Frequenzbereichen. Schwingungen können sich auch auf eine Karosserie des Fahrzeugs übertragen, was besonders unerwünscht ist.

Es ist daher die Aufgabe der vorliegenden Erfindung, eine verbesserte Anhängekupplung bereitzustellen.

Zur Lösung der Aufgabe ist bei einer Anhängekupplung der eingangs genannten Art vorgesehen, dass an einem Anbringungsort der Schwingungskomponente eine Schwingungsdämpferanordnung mit mindestens einem Dämpferelement zur Dämpfung der Schwingungen in Bezug auf mindestens eine Schwingungsfrequenz angeordnet ist.

Es ist ein Grundgedanke der vorliegenden Erfindung, dass eines oder mehrere Dämpferelemente eine oder mehrere Schwingungen gezielt dämpfen, sodass eine Geräuschentwicklung der Anhängekupplung bei einer mechanischen Betätigung, beispielsweise bei einem Verriegelungsvorgang der Fixiereinrichtung oder dergleichen, deutlich verringert ist, insbesondere deren Auswirkung auf eine Karosserie des Kraftfahrzeugs verringert ist.

Die Schwingungsdämpferanordnung sorgt für ein möglichst schnelles Abklingen der Schwingung. Die Schwingungsdämpferanordnung verhindert die Schwingung als solche zwar nicht, sorgt jedoch dafür, dass eine Amplitude der Schwingung schnell abnimmt.

Die Schwingungsdämpferanordnung, insbesondere das mindestens eine Dämpferelement, wirkt einer schwingungserzeugenden, also einer oszillierenden Bewegung des Schwingungselements entgegen.

Die Schwingungsdämpferanordnung, insbesondere das mindestens eine Dämpferelement, wirkt einer durch die Bewegungskomponente erzeugten Schwingung entgegen und/oder dämpft eine durch die Bewegungskomponente erzeugte Schwingung.

Die Bewegungskomponente und die Schwingungskomponente sind vorteilhaft voneinander separate Komponenten der Anhängekupplung.

Die Schwingungskomponente ist vorzugsweise im am Kraftfahrzeug montierten Zustand der Anhängekupplung bezüglich einer Karosserie des Kraftfahrzeugs ortsfest und/oder unbeweglich gehalten.

Das mindestens eine Dämpferelement kann in vielfältiger Weise ausgestaltet sein.

Beispielsweise kann vorgesehen sein, dass das mindestens eine Dämpferelement einen von der Schwingungskomponente separaten Dämpferkörper umfasst, der anhand eines Befestigungsmittels an der Schwingungskomponente befestigt ist.

Es können auch mehrere Dämpferkörper vorhanden sein.

Der Dämpferkörper ist vorteilhaft nicht einstückig mit der Schwingungskomponente. Beispielsweise ist der Dämpferkörper nicht als eine Aussparung an der Schwingungskomponente ausgestaltet. Der Dämpferkörper ist vorteilhaft auch nicht als beispielsweise Schweißnaht, eine einstückig an der Schwingung kompetente ausgebildete zusätzliche Masse ausgestaltet. Der Dämpferkörper ist also vorzugsweise eine dediziert zum Zwecke der Dämpfung in Bezug auf die mindestens eine Schwingungsfrequenz vorgesehener Dämpferkörper, der an dem Anbringungsort gezielt zur Dämpfung der Schwingungen in Bezug auf die mindestens eine Schwingungsfrequenz angeordnet ist.

Vorteilhaft ist vorgesehen, dass das Befestigungsmittel eine Relativbewegung des mindestens einen Dämpferkörpers und der Schwingungskomponente ermöglicht und/oder weicher als der Dämpferkörper und/oder die Schwingungskomponente im Bereich des Anbringungsorts ist.

Vorteilhaft sind der Dämpferkörper und das diesen haltende Befestigungsmittel voneinander separate Komponenten. Es ist aber auch möglich, dass das Befestigungsmittel mindestens eine Komponente aufweist, die einstückig mit dem Dämpferkörper ist. Beispielsweise kann der Dämpferkörper einen Befestigungsvorsprung und/oder eine Befestigungsaufnahme aufweisen, die beispielsweise mit der Schwingungskomponente formschlüssig und/oder stoffschlüssig verbindbar oder verbunden ist.

Das Befestigungsmittel ermöglicht vorteilhaft, dass der Dämpferkörper relativ zu der Schwingungskomponente oder die Schwingungskomponente relativ zu dem Dämpferkörper beweglich ist. Somit können also die Schwingungskomponente und der Dämpferkörper mit einer Phasenverschiebung schwingen und/oder in unterschiedlichen Frequenzen schwingen und/oder gegensinnige Schwingungsbewegungen ausführen.

Beispielsweise ist es möglich, dass der Dämpferkörper im Bereich von maximalen Amplituden im Sinne einer Dämpfung auf die Schwingungskomponente wirkt. Es ist möglich, dass der Dämpferkörper sich beispielsweise bei einer maximalen Amplitude der Schwingungskomponente zu der Schwingungskomponente hin bewegt, sodass der Dämpferkörper der maximalen Amplitude entgegenwirkt. Der Dämpferkörper und die Schwingungskomponente können beispielsweise gegenphasig, insbesondere im Bereich einer oder mehrerer Schwingungen, schwingen. Dadurch wird beispielsweise eine akustische Auswirkung der Schwingung der Schwingungskomponente verringert.

Bei der Ausgestaltung des Befestigungsmittels sind verschiedene Varianten möglich.

Vorteilhaft ist vorgesehen, dass, das Befestigungsmittel ein Klebemittel, insbesondere ein doppelseitiges Klebeband und/oder einen elastischen und/oder porösen Kunststoff und/oder ein Federelement und/oder einen Magneten umfasst oder dadurch gebildet ist. Es sind ohne weiteres Kombinationen möglich. Beispielsweise kann ein doppelseitiges Klebeband eine poröse und/oder elastische Schicht umfassen. Der poröse Kunststoff ist beispielsweise ein Schaumstoff oder dergleichen. Es ist auch möglich, dass ein Gummimaterial oder dergleichen anderes elastisches Element bei dem Befestigungsmittel oder als das Befestigungsmittel vorgesehen ist. Ein Klebeband, ein poröser Kunststoff, eine elastische Schicht oder dergleichen ermöglichen vorteilhaft eine Relativbewegung des Dämpferkörpers und der Schwingungskomponente relativ zueinander.

Bevorzugt ist, wenn der Dämpferkörper stoffschlüssig, beispielsweise durch eine Klebeverbindung, an der Komponente angeordnet und/oder befestigt ist.

Bevorzugt ist, dass das Befestigungsmittel den Dämpferkörper flächig und/oder vollflächig an der Schwingungskomponente hält.

Besonders bevorzugt ist es, wenn der Dämpferkörper im Wesentlichen flächig durch das Befestigungsmittel an der Schwingungskomponente gehalten ist. Das Befestigungsmittel erstreckt sich vorzugsweise zu mindestens 80 %, noch weiter bevorzugt zu mindestens 90 % einer der Schwingungskomponente gegenüberliegenden Fläche des Dämpferkörpers und verbindet den Dämpferkörper im Bereich dieser Fläche mit der Schwingungskomponente.

Vorteilhaft ist eine die Schwingungskomponente überdeckende Überdeckungsfläche des Dämpferkörpers vollflächig anhand des Befestigungsmittels mit der Schwingungskomponente verbunden. Es ist aber auch möglich, dass das Befestigungsmittel vor die Überdeckungsfläche vorsteht.

Weiterhin ist möglich, dass die Überdeckungsfläche teilweise frei vor das Befestigungsmittel die Schwingungskomponente überdeckend vorsteht. Somit ist eine besonders freie Beweglichkeit der Schwingungskomponente grundsätzlich möglich.

Das mindestens eine Dämpferelement, insbesondere der Dämpferkörper, weist vorzugsweise eine große Härte auf. Das Dämpferelement, insbesondere der Dämpferkörper, weist vorzugsweise Metall und/oder Keramik auf oder besteht daraus. Gerade der Dämpferkörper besteht vorzugsweise aus einem metallischen Material, aus einem Keramikmaterial oder dergleichen. Eine Härte des Dämpferkörpers unterscheidet sich vorzugsweise von einer Härte der Schwingungskomponente der Anhängekupplung nicht oder nur unwesentlich. Demgegenüber kann es sich bei dem Befestigungsmittel um ein weicheres Material handeln, beispielsweise um einen Klebstoff, einen elastischen Kunststoff oder dergleichen.

Insbesondere unterscheidet sich die Härte des Dämpferkörpers um maximal 50 %, bevorzugt maximal 40 % oder 30 %, von einer Härte der Schwingungskomponente. Dabei ist bevorzugt, dass der Dämpferkörper härter als die Schwingungskomponente ist.

Vorteilhaft kann vorgesehen sein, dass ein spezifisches Gewicht des Dämpferkörpers kleiner als ein spezifisches Gewicht der Schwingungskomponente ist. Dies ist beispielsweise dann der Fall, wenn der Dämpferkörper aus einem Keramik-Material besteht, während die Schwingungskomponente aus Stahl oder Eisenmetall besteht.

Eine Härte des Befestigungsmittels beträgt maximal 40 %, bevorzugt maximal 30 %, noch weiter bevorzugt maximal 20 %, noch weiter bevorzugt maximal 10 % einer Härte der Schwingungskomponente und/oder der Härte des Dämpferkörpers.

Bevorzugt ist es, wenn der Anbringungsort der Schwingungsdämpferanordnung, insbesondere des mindestens einen Dämpferelements, in einem Bereich der Schwingungskomponente liegt, an dem die Schwingungskomponente in Bezug auf die mindestens eine durch das mindestens eine Dämpferelement gedämpfte Schwingungsfrequenz eine maximale Amplitude aufweist. Dabei muss die Schwingungsdämpferanordnung, insbesondere der Dämpferkörper, nicht exakt am Ort der maximalen Amplitude angeordnet sein. Es ist vorteilhaft vorgesehen, dass die Schwingungsdämpferanordnung, insbesondere das mindestens eine Dämpferelement oder eine Schwingungsdämpferanordnung umfassend mindestens zwei oder exakt zwei Dämpferelemente, insbesondere der Dämpferkörper, oder eines oder mehrere Dämpferelemente der Schwingungsdämpferanordnung mit einer Abweichung von maximal 100 %, bevorzugt maximal 80 %, noch weiter bevorzugt maximal 50 %, in Bezug auf seine Längserstreckung und/oder seine Quererstreckung zu dem Ort der maximalen Amplitude der Schwingungskomponente beabstandet ist.

Die Dämpferanordnung kann mehrere Dämpferelemente umfassen, beispielsweise um ein Zentrum herum angeordnete Dämpferelemente, entlang einer Längsachse oder einer Linie angeordnete Dämpferelemente oder dergleichen. Auch bei einer derartigen Dämpferanordnung ist es vorteilhaft, wenn diese in einem Bereich der Schwingungskomponente angeordnet ist, in der diese in Bezug auf die durch die Dämpferanordnung gedämpfte Schwingungsfrequenz ihre maximale Amplitude aufweist. Beispielsweise kann dieser Bereich der Schwingungskomponente bei einer Dämpferanordnung mit zwei Dämpferelementen zwischen diesen Dämpferelementen liegen. Wenn eine Dämpferanordnung drei oder weitere Dämpferelemente umfasst, können diese beispielsweise ringförmig um den genannten Bereich der Schwingungskomponente angeordnet sein.

Wenn eine Dämpferanordnung mit mehreren Dämpferelementen vorgesehen ist, zum Beispiel zwei oder drei Dämpferelementen, ist es vorteilhaft, wenn eine geometrische Mitte und/oder Längsmitte der Dämpferanordnung exakt oder mit einer Abweichung von maximal 50 %, noch weiter bevorzugt maximal 40 % oder 30 %, noch weiter bevorzugt maximal 20 % in demjenigen Bereich der Schwingungskomponente liegt, an dem die Schwingungskomponente in Bezug auf die mindestens eine durch die Dämpferanordnung gedämpfte Schwingungsfrequenz eine maximale Amplitude aufweist.

Es ist auch möglich, dass mehrere, zum Beispiel zwei, Dämpferelemente vorgesehen sind, von denen beide oder eines davon neben dem Ort der maximalen Amplitude des Schwingungselements in Bezug auf die durch das Dämpferelement oder in diesem Falle die Dämpferelemente gedämpfte Schwingungsfrequenz angeordnet sind oder ist. Beispielsweise ist es möglich, dass der Ort der maximalen Amplitude zwischen zwei Dämpferelementen angeordnet ist oder dass eines der Dämpferelemente direkt am Ort der maximalen Amplitude angeordnet ist, während ein anderes Dämpferelement daneben angeordnet ist.

Zwar ist es grundsätzlich möglich, dass die Schwingungsdämpferanordnung, insbesondere das mindestens eine Dämpferelement, verschiedene Schwingungsfrequenzen des Schwingungselements dämpfen kann, bei denen es sich nicht um die Eigenfrequenz oder eine nahe bei der Eigenfrequenz der Schwingungskomponente liegende Schwingungsfrequenz handeln muss. Bevorzugt ist jedoch die durch die Schwingungsdämpferanordnung gedämpfte, insbesondere die durch das mindestens eine Dämpferelement gedämpfte, Schwingungsfrequenz eine Eigenfrequenz der Schwingungskomponente, insbesondere eine Eigenfrequenz an dem Anbringungsort des Dämpfungselements. Insbesondere hat die Schwingungskomponente an dem Anbringungsort in Bezug auf die Eigenfrequenz eine maximale Amplitude. Es ist möglich, dass die Schwingungskomponente an verschiedenen Orten unterschiedliche Eigenfrequenzen aufweist. Im Bereich der jeweils maximalen Amplitude der jeweiligen Eigenfrequenz ist vorzugsweise jeweils mindestens ein Dämpferelement oder eine Schwingungsdämpferanordnung gemäß der Erfindung angeordnet.

Ein vorteilhaftes Ausführungsbeispiel kann vorsehen, dass der Anbringungsort zwischen der Lagerbasis und einem Befestigungsort der Schwingungskomponente, an dem die Schwingungskomponente ortsfest gehalten ist, liegt, wobei der Befestigungsort vorzugsweise ein zur Montage an dem Kraftfahrzeug vorgesehener Befestigungsbereich der Fahrzeughalterung oder ein zur Befestigung an dem Kraftfahrzeug vorgesehener Seitenträger ist, wobei die Schwingungsdämpferanordnung, insbesondere das mindestens eine Dämpferelement, einen ersten Längsabstand zu der Lagerbasis und einen zweiten Längsabstand zu dem Befestigungsort aufweist, wobei die Längsabstände ungefähr gleich sind oder sich um maximal 50 %, insbesondere maximal 40 %, noch weiter bevorzugt maximal 30 % oder 20 % voneinander unterscheiden. Beispielsweise ist die Schwingungskomponente ein Träger, insbesondere ein Rohrkörper oder dergleichen, der sich unter anderem zwischen der Lagerbasis und dem Befestigungsort erstreckt. Etwa mittig an dem Träger zwischen der Lagerbasis und dem Befestigungsort ist vorteilhaft die Schwingungsdämpferanordnung, insbesondere das mindestens eine Dämpferelement, angeordnet.

Eine Anhängekupplung muss beim Fahrbetrieb hoch belastbar sein, beispielsweise eine Anhängelast von 1 t bis 2,5 t etc. ermöglichen. Somit sind die Komponenten der Anhängekupplung in der Regel massive, schwere Bauteile, jedenfalls Bauteile, die erhebliches Eigengewicht aufweisen können. Demgegenüber kann die Schwingungsdämpferanordnung, insbesondere das mindestens eine Dämpferelement, vorteilhaft der Dämpferkörper oder alle Dämpferkörper oder ein Gesamtgewicht aller Dämpferkörper der Schwingungsdämpferanordnung, deutlich leichter sein. Vorteilhaft ist vorgesehen, dass ein Eigengewicht der Schwingungskomponente mindestens das 100-fache, vorzugsweise mindestens das 200-fache, noch weiter bevorzugt mindestens das 300-fache oder 400-fache, noch weiter bevorzugt mindestens das 700-fache, 800-fache oder 900-fache, noch weiter bevorzugt mindestens das Tausendfache eines Eigengewichts der Schwingungsdämpferanordnung, insbesondere des mindestens einen Dämpferelements, vorteilhaft des Dämpferkörpers oder aller Dämpferkörper oder ein Gesamtgewicht aller Dämpferkörper der Schwingungsdämpferanordnung, beträgt. Beispielsweise hat die Schwingungskomponente ein Gewicht von zehn Kilo bis 20 Kilo, während der Dämpferkörper oder das Dämpferelement ein Gewicht zwischen 5 g bis 40 g, insbesondere ein Gewicht zwischen 5 g und 30 g, noch weiter bevorzugt ein Gewicht zwischen 5 g und 20 g, noch weiter bevorzugt zwischen 5 g und 15 g. Man erkennt also, dass ein kleines, leichtes Dämpferelement einen großen Effekt aufweisen kann.

Das mindestens eine Dämpferelement, insbesondere der Dämpferkörper, weist vorteilhaft eine Flachgestalt und/oder kubische Gestalt auf. Das Dämpferelement, zum Beispiel der Dämpferkörper, ist vorzugsweise streifenförmig.

Das mindestens eine Dämpferelemente, insbesondere der Dämpferkörper, könnte beispielsweise eine plattenförmige Gestalt aufweisen und/oder als Streifenkörper ausgebildet sein.

Ein maximaler Querschnitt der Schwingungsdämpferanordnung, insbesondere des mindestens einen Dämpferelements, beträgt vorzugsweise maximal 20 %, noch weiter bevorzugt maximal 15 %, noch weiter bevorzugt maximal 10 %, noch weiter bevorzugt maximal 5 % eines maximalen Querschnitts der Schwingungskomponente am Anbringungsort der Schwingungsdämpferanordnung, insbesondere des mindestens einen Dämpferelements. Auch durch diese Formulierung wird deutlich, dass die Schwingungsdämpferanordnung, insbesondere das mindestens eine Dämpferelement, vorteilhaft der Dämpferkörper, im Vergleich zu der Schwingungskomponente vorteilhaft deutlich kleiner ist.

Ein vorteilhaftes Konzept sieht vor, dass das mindestens eine Dämpferelement in der Art eines Wuchtgewichts für Fahrzeugräder ausgestaltet ist oder durch ein Wuchtgewicht für Fahrzeugräder gebildet ist. Ein derartiges Wuchtgewicht ist klein, leicht und kostengünstig. Es ist möglich, durch entsprechend eine Auswahl von Wuchtgewichten aus einer Reihe, die in beispielsweise als einbaufertige Gewichte mit 5 g oder 10 g zur Verfügung stehen, eine optimale Dämpfung bereitzustellen.

Bevorzugt ist es, wenn das mindestens eine Dämpferelement und/oder die Schwingungsdämpferanordnung kompakt und klein ist. Beispielsweise ist vorteilhaft vorgesehen, dass die Schwingungsdämpferanordnung, insbesondere das mindestens eine Dämpferelement, nur einen Teilbereich einer Oberfläche der Schwingungskomponente überdeckt. Beispielsweise beträgt der durch die Schwingungsdämpferanordnung oder das mindestens eine Dämpferelement überdeckte Teilbereich maximal 20 %, noch weiter maximal 10 %, noch weiter maximal 5 %, noch weiter maximal 2 % oder ein Prozent der Oberfläche der Schwingungskomponente.

Die Schwingungsdämpferanordnung, insbesondere das mindestens eine Dämpferelement, erstreckt sich beispielsweise in Bezug auf eine Außenumfangslänge oder Außenumfangskontur der Schwingungskomponente an dem Anbringungsort nur zu maximal 20 %, noch weiter bevorzugt maximal 15 %, noch weiter bevorzugt maximal 10 %, noch weiter bevorzugt maximal 5 % der gesamten Außenumfangslänge oder Außenumfangskontur der Schwingungskomponente an dem Anbringungsort. Die Außenumfangskontur oder Außenumfangslänge ist dabei beispielsweise eine Außenumfangskontur oder Außenumfangslänge eines Querschnitts durch die Schwingungskomponente. An dem Anbringungsort weist die Schwingungskomponente eine Außenumfangskontur auf, an der die Schwingungsdämpferanordnung oder das mindestens eine Dämpferelement angeordnet ist. Allerdings überdeckt die Schwingungsdämpferanordnung oder das mindestens eine Dämpferelement nur einen Teil der Außenumfangskontur. Die Außenumfangskontur der Schwingungskomponente ist beispielsweise eine runde oder rechteckige oder rund-rechteckige Außenumfangskontur, wenn die Schwingungskomponente ein stabförmiger oder rohrförmiger oder zylindrischer Körper ist. Die Schwingungsdämpferanordnung oder das mindestens eine Dämpferelement ist zwar an dieser Außenumfangskontur angeordnet, erstreckt sich aber nur über einen Teilbereich der Außenumfangskontur, wobei dieser Teilbereich in Bezug auf die Außenumfangskontur die Außenumfangslänge aufweist.

Vorteilhaft ist vorgesehen, dass sich die Schwingungsdämpferanordnung, insbesondere das mindestens eine Dämpferelement, nur über maximal 20 %, noch weiter bevorzugt maximal 15 % oder 10 %, noch weiter bevorzugt maximal 5 % einer Längslänge der Schwingungskomponente erstreckt. Wenn die Schwingungskomponente beispielsweise ein Querträger ist, der zur Befestigung am Heck des Kraftfahrzeugs vorgesehen ist und sich quer zu einer Fahrzeuglängsrichtung des Kraftfahrzeugs erstreckt, ist das mindestens eine Dämpferelement, vorzugsweise die Schwingungsdämpferanordnung als Ganzes, deutlich weniger lang als die Länge des Querträgers, die beispielsweise etwa der Querbreite des Kraftfahrzeugs entspricht. Wenn die Schwingungsdämpferanordnung mehrere Dämpferelemente, beispielsweise zwei Dämpferelemente umfasst, ist auch deren Längslänge insgesamt, wenn diese Dämpferelemente beispielsweise in ihren längst Richtungen aneinandergereiht sind, kleiner als die Längslänge der Schwingungskomponente und beträgt vorzugsweise maximal 20 %, noch weiter bevorzugt maximal 15 % oder 10 %, noch weiter bevorzugt maximal 5 % einer Längslänge der Schwingungskomponente. Am Beispiel des Querträgers können also beispielsweise zwei Dämpferelemente vorgesehen sein, die sich nur über 20 % oder 15 % der gesamten Längslänge des Querträgers erstrecken.

Es ist möglich, dass die Schwingungsdämpferanordnung mehrere Dämpferelemente umfasst, die an zueinander winkeligen oder einander gegenüberliegenden Abschnitten der Schwingungskomponente angeordnet sind. Beispielsweise kann die Schwingungsdämpferanordnung zwei Dämpferelemente umfassen, die an einander gegenüberliegenden oder zueinander winkeligen Seitenwänden angeordnet sind. Dabei ist es möglich, dass die Dämpferelemente beispielsweise an voneinander abgewandten Außenseiten der einander gegenüberliegenden Seitenwände angeordnet sind oder einander zugewandten Innenseiten der Seitenwände angeordnet sind oder eines der Dämpferelemente an einer Innenseite und das andere Dämpferelement an der Außenseite der einander gegenüberliegenden Seitenwände angeordnet sind.

Zwar ist es möglich, dass die Schwingungsdämpferanordnung, insbesondere das mindestens eine Dämpferelement, über ihre oder seine Funktion als Schwingungsdämpfer hinaus eine weitere Funktion hat, beispielsweise zum Halten eines Kabels, einer elektrischen Leitung oder dergleichen vorgesehen und ausgestaltet ist.

Bevorzugt ist jedoch vorgesehen, dass das mindestens eine Dämpferelement , insbesondere der Dämpferkörper, ausschließlich zum Zweck der Dämpfung der Schwingungen an der Schwingungskomponente angeordnet ist. Somit kann das Dämpferelement optimal auf seine Dämpfungsfunktion ausgestaltet sein. Beispielsweise ist das Dämpferelement frei und ohne eine weitere Komponente an der Schwingungskomponente angeordnet. Es ist aber auch möglich, dass eine Mehrfachfunktion gegeben ist, d.h. dass das Dämpferelement zwar beispielsweise einen Dämpferkörper aufweist, der ausschließlich zum Zwecke der Dämpfung vorgesehen ist, zusätzlich beispielsweise eine Halterung für ein Kabel oder dergleichen andere Funktion aufweist.

Die Schwingungsdämpferanordnung, insbesondere das mindestens eine Dämpferelement, ist vorzugsweise zusätzlich zu elektrischen und/oder sensorischen Komponenten der Anhängekupplung, beispielsweise zu elektrischen Leitungen, zu einem elektrischen Kontakt, insbesondere einer elektrischen Anhängersteckdose, zusätzlich zu Sensoren, und unabhängig von den elektrischen und/oder sensorischen Komponenten der Anhängekupplung ausgestaltet und vorgesehen. So können zum Beispiel elektrische Kabel, eine Anhängersteckdose, ein Sensor, insbesondere ein Winkelsensor zur Erfassung einer Winkelstellung eines an die Anhängekupplung angehängten Anhängers relativ zum Kraftfahrzeug, vorgesehen sein, von denen das mindestens eine Dämpferelement oder die Schwingungsdämpferanordnung als Ganzes, unabhängig sind. Dies gilt vorzugsweise für sämtliche elektrische und/oder sensorischen Komponenten. Die Schwingungsdämpferanordnung oder das mindestens eine Dämpferelement ist unabhängig von diesen elektrischen und sensorischen Komponenten an der Anhängekupplung angeordnet.

Die Schwingungskomponente kann an sich ein beliebiger tragender Körper sein, insbesondere ein Teil der Fahrzeughalterung. Gerade Teile der Fahrzeughalterung oder die Fahrzeughalterung als Ganzes soll möglichst nicht oder wenig schwingen, wenn die Bewegungskomponente der Anhängekupplung aktiv ist.

Vorteilhaft ist vorgesehen, dass die Schwingungskomponente eine Komponente der Fahrzeughalterung, insbesondere ein die Lagerbasis tragender Querträger oder zur Anbringung an einer Karosserie des Kraftfahrzeugs vorgesehener und/oder ausgestalteter Längsträger, ist. Es ist möglich, dass verschiedene Komponenten der Fahrzeughalterung, beispielsweise der vorgenannte Querträger und/oder ein Längsträger oder Seitenträger der Fahrzeughalterung, durch die Betätigung oder eine Betätigung der Bewegungskomponente in unterschiedlichen Schwingungsfrequenzen schwingen. Bevorzugt ist es, wenn an mindestens zwei, vorzugsweise an mehreren oder jeder Komponente der Fahrzeughalterung, mindestens ein Dämpferelement und/oder eine Schwingungsdämpferanordnung angeordnet ist.

Wenn eine Komponente der Anhängekupplung ein massiver Körper ist, neigt sie weniger zu einem Schwingen oder zum Schwingen mit niedrigeren Frequenzen, sodass eine Dämpfung weniger notwendig ist.

Bevorzugt ist vorgesehen, dass die Schwingungskomponente ein Hohlkörper und/oder Rohrkörper ist. Eine Dämpfung an einem Hohlkörper oder Rohrkörper kann besonders effektiv sein.

Vorteilhaft ist vorgesehen, die Schwingungskomponente ganz oder zumindest an dem Anbringungsort der Schwingungsdämpferanordnung oder mindestens eines Dämpferelements der Schwingungsdämpferanordnung einen Hohlraum aufweist und/oder als Resonanzkörper ausgebildet ist. Das Dämpferelement oder die Schwingungsdämpferanordnung dämpft also gerade dort, wo die Schwingungskomponente aufgrund des Hohlraums oder ihrer Ausprägung als Resonanzkörper besonders zu Schwingungen neigt und/oder besonders stark und/oder mit einer maximalen Amplitude oder im Bereich ihrer maximalen Amplitude schwingt.

Es ist möglich, dass gerade niedrige Schwingungsfrequenzen vom Nutzer der Anhängekupplung oder des Kraftfahrzeugs eher akzeptiert werden als höhere Schwingungsfrequenzen. Eine niedrige Schwingungsfrequenz kann beispielsweise einen Eindruck einer soliden Verriegelung oder Bewegung der Anhängekupplung implizieren. Höhere Frequenzen hingegen können deutlich störender sein oder einen Eindruck mangelnder Wertigkeit oder zuverlässiger Verriegelung oder Bewegung der Anhängekupplung erwecken. Bevorzugt ist es, wenn die durch das mindestens eine Dämpferelement gedämpfte Schwingungsfrequenz mehr als 1000 Hz, vorzugsweise größer als 1500 Hz, noch weiter bevorzugt größer als 2000 Hz, noch weiter bevorzugt größer als 2500 Hz oder 3000 Hz, insbesondere größer als 3100 Hz oder 3200 Hz ist, insbesondere etwa 3400 Hz beträgt.

Es ist auch möglich, dass die Schwingungsdämpferanordnung oder das mindestens eine Dämpferelement, insbesondere ausschließlich oder im Wesentlichen oder in Bezug auf ihre Wirkung zu mindestens 80 % oder 90 %, zur Dämpfung von Oberschwingungen der mindestens einen Schwingungsfrequenz ausgestaltet und vorgesehen ist.

Die Anhängekupplung umfasst vorzugsweise einen Kupplungsarmträger, an dem der Kupplungsarm angeordnet oder anordenbar ist. Beispielsweise weist der Kupplungsarmträger eine Aufnahme, insbesondere eine Steckaufnahme, zum Halten des Kupplungsarmes auf.

Der Kupplungsarmträger ist vorzugsweise in Bezug auf die Lagerbasis zwischen der eingangs genannten Gebrauchsstellung und der Nichtgebrauchsstellung verstellbar, beispielsweise schwenkbar und/oder verschieblich. Zwischen der Lagerbasis und dem Kupplungsarmträger ist vorzugsweise ein Schwenklager und/oder Schiebelager vorgesehen oder die Lagerbasis bildet zusammen mit dem Kupplungsarmträger ein Schwenklager oder Schiebelager oder eine Kombination davon. Beispielsweise ist der Kupplungsarmträger in diesem Fall die Bewegungskomponente oder umfasst die Bewegungskomponente.

Die Fixiereinrichtung umfasst vorzugsweise eine Formschluss-Verriegelung, bei der in einer Verriegelungsstellung ein Formschlusskörper in eine Formschlussaufnahme eingreift. Es können mehrere Formschlusskörper und mehrere Formschlussaufnahmen vorgesehen sein. Der Formschlusskörper und/oder die Formschlussaufnahme können die Bewegungskomponente bilden.

Insbesondere können der Formschlusskörper am einen von Kupplungsarmträger und Lagerbasis und die Formschlussaufnahme am andern von Kupplungsarmträger und Lagerbasis angeordnet sein. Insbesondere können der Formschlusskörper und die Formschlussaufnahme durch eine Verschiebung des Kupplungsarmträgers entlang einer Schiebeachse außer Eingriff und in Eingriff gebracht werden. Die Schiebeachse ist vorzugsweise eine Schwenkachse, um die der Kupplungsarmträger bezüglich der Lagerbasis schwenkbar gelagert ist.

Die Fixiereinrichtung umfasst ferner vorteilhaft einen Antriebskörper, insbesondere einen Bolzen, zum Antreiben des mindestens einen Formschlusskörpers in Richtung der Formschlussaufnahme und/oder aus der Formschlussaufnahme. Der Antriebskörper kann direkt auf den mindestens einen Formschlusskörper wirken oder auch indirekt, beispielsweise anhand mindestens eines Übertragungskörpers, zum Beispiel einer oder mehrerer Kugeln, Wälzkörper oder dergleichen.

Die mindestens eine Schwingungsfrequenz kann eine iterative Schwingungsfrequenz sein, die beispielsweise durch intermittierende Betätigung der Bewegungskomponente oder dergleichen erzeugt wird, zum Beispiel durch einen motorischen Antrieb und/oder dessen Getriebe. Ein vorteilhaftes Ausführungsbeispiel sieht vor, dass die Bewegungskomponente die Schwingungen und/oder die mindestens eine Schwingungsfrequenz bei einem Anschlagen an einem Anschlag erzeugt.

Die Bewegungskomponente ist beispielsweise ein Formschlusselement, welches an einem Gegen-Formschlusselement bei einer Verstellung der Fixiereinrichtung in eine Fixierstellung anschlägt. Die Bewegungskomponente kann aber auch beispielsweise ein Antriebskörper, insbesondere ein Antriebsbolzen oder dergleichen, der Fixiereinrichtung sein.

Auch motorische oder motorisch verstellbare Komponenten der Anhängekupplung können die Bewegungskomponente bilden. Beispielsweise kann ein Antriebsmotor der Anhängekupplung, mit dem die Fixiereinrichtung zwischen einer den Kupplungsarm ortsfest bezüglich der Lagerbasis fixierenden Stellung und einer den Kupplungsarm bezüglich der Lagerbasis verstellbaren Stellung, verstellbar ist und/oder mit dem der Kupplungsarm zwischen der Gebrauchsstellung und der Nichtgebrauchsstellung verstellbar ist, zu den Schwingungen der Schwingungskomponente führen, zu deren Dämpfung die Schwingungsdämpferanordnung mit dem mindestens einen Dämpferelements vorgesehen und/oder ausgestaltet ist.

Weiterhin ist es möglich, dass der Kupplungsarm beim Anschlagen an einem Anschlag, der der Gebrauchsstellung zugeordnet ist, und/oder an einem Anschlag, der der Nichtgebrauchsstellung zugeordnet ist, Schwingungen erzeugt, sodass eine Schwingungskomponente die durch die Schwingungsdämpferanordnung dämpfbaren oder gedämpften Schwingungen erzeugt.

Ein bevorzugtes Konzept sieht vor, dass durch eine Berechnung, insbesondere anhand einer Finite-Elemente-Berechnung, eine jeweilige zu dämpfende Schwingungsfrequenz, insbesondere eine Eigenfrequenz, sowie ein geeigneter Anbringungsort für die Schwingungsdämpferanordnung, insbesondere das mindestens eine Dämpferelement, beispielsweise der Ort maximaler Amplitude der Schwingungskomponente mit der Eigenfrequenz, ermittelt werden. Zudem ist es bevorzugt, wenn auch eine geeignete Schwingungsdämpferanordnung, insbesondere ein geeignetes Dämpferelement, insbesondere ein geeignetes Gewicht eines jeweiligen Dämpferelements, anhand einer Berechnung in Bezug auf die zu dämpfende Schwingungsfrequenz ermittelt wird.

Nachfolgend werden Ausführungsbeispiele der Erfindung anhand der Zeichnung erläutert. Es zeigen:

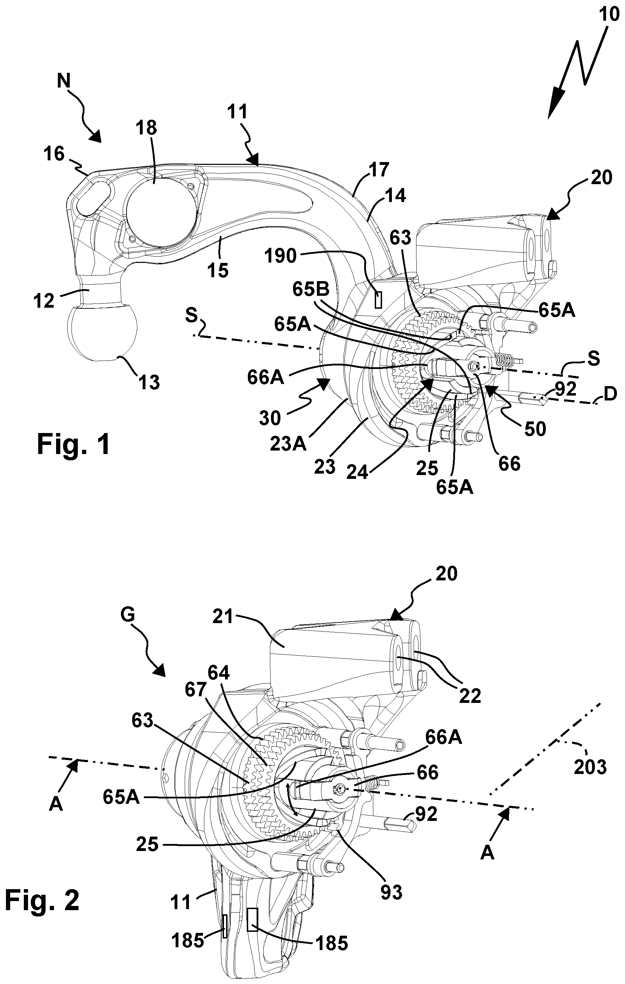

- Figur 1: eine perspektivische Schrägansicht einer Anhängekupplung in Nichtgebrauchsstellung von schräg hinten,
- Figur 2: die Anhängekupplung gemäß Figur 1, jedoch in der Gebrauchsstellung,

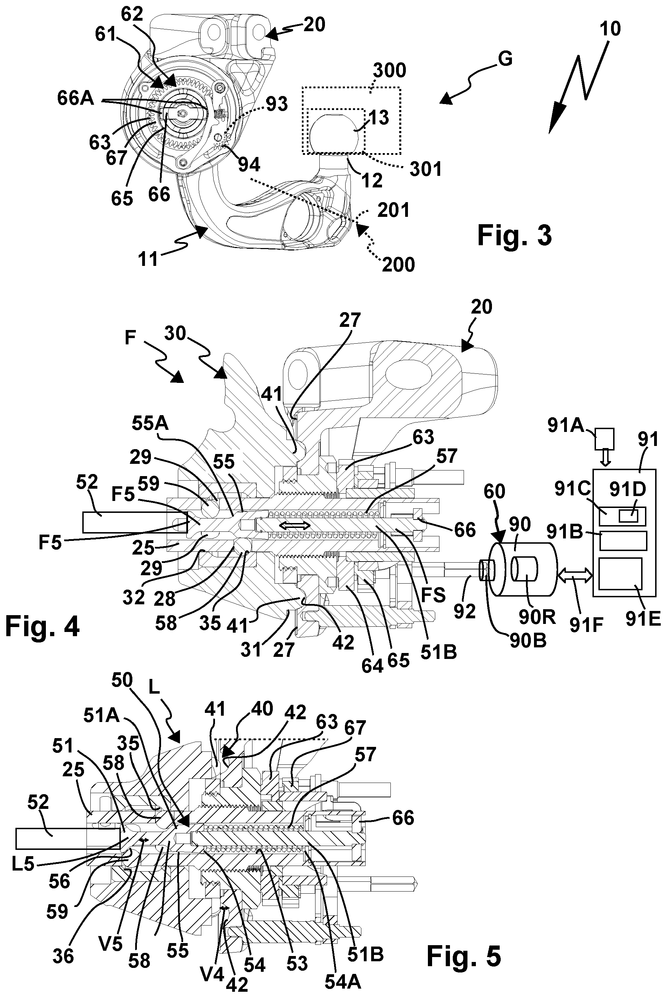

- Figur 3: die Anhängekupplung gemäß Figuren 1, 2 in der Gebrauchsstellung von schräg vorn,
- Figur 4: eine Schnittdarstellung der Anhängekupplung gemäß der vorstehenden Figuren etwa entlang einer Schnittlinie A-A in Figur 2, wobei eine Fixiereinrichtung in ihrer Fixierstellung ist,
- Figur 5: die Schnittdarstellung gemäß Figur 4, wobei die Fixiereinrichtung in ihrer Lösestellung ist,
- Figur 6: eine Fahrzeughalterung der Anhängekupplung mit einer Lagerbasis sowie Gegen-Formschlusselementen der Fixiereinrichtung in perspektivischer Schrägansicht,
- Figur 7: einen Kupplungsarmträger der Anhängekupplung mit Formschlusselementen der Fixiereinrichtung,
- Figur 8: eine Draufsicht auf die Anhängekupplung gemäß vorstehender Figuren einschließlich einer Fahrzeughalterung der Anhängekupplung von oben,

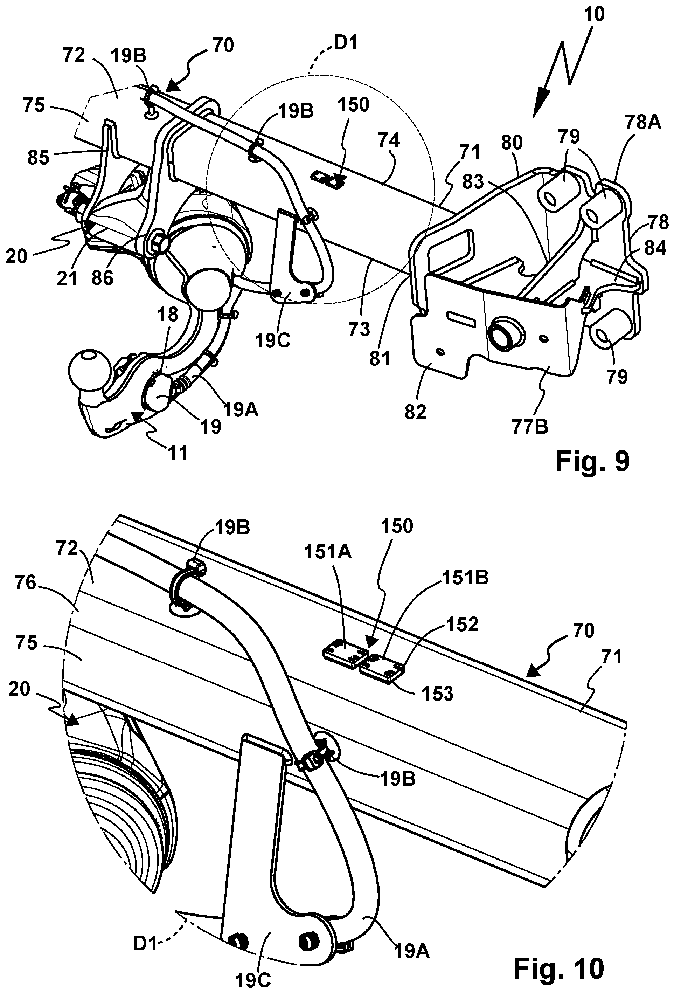

- Figur 9: einen Teilabschnitt der Anhängekupplung gemäß vorstehender Figuren in perspektivischer Schrägansicht von schräg hinten oben,
- Figur 10: ein Detail D1 aus Figur 9,
- Figur 11: eine Ansicht von hinten auf den Teilabschnitt gemäß Figur 9,
- Figur 12: einen Schnitt durch einen Querträger der Anhängekupplung der vorstehenden Figuren, etwa entlang einer Schnittlinie V-V in Figur 11, wobei eine obere Wand des Querträgers in einem ersten Schwingungszustand ist,
- Figur 13: den Schnitt gemäß Figur 12, wobei die obere Wand des Querträgers in einem zweiten Schwingungszustand ist.

Eine Anhängekupplung 10 dient zum Anhängen eines Anhängers 300 an ein Kraftfahrzeug 200, welches nur schematisch dargestellt ist.

Die Anhängekupplung 10 weist einen Kupplungsarm 11 auf, der an einem Kupplungsarmträger 30 angeordnet ist. Der Kupplungsarm 11 hat an seinem freien Längsende 12 einen Kuppelkörper 13, insbesondere eine Kupplungskugel, und ist mit seinem anderen Längsende 14 mit dem Kupplungsarmträger 30 verbunden, insbesondere einstückig. Zwischen den Längsenden 12, 14 erstreckt sich ein Armabschnitt 15, der im Wesentlichen geradlinig verläuft und zwischen Krümmungsabschnitten 16 und 17 angeordnet ist, die sich zu den Längsenden 12 und 14 hin erstrecken.

Der Anhänger 300 ist an den Kuppelkörper 13, die Kupplungskugel, anhand einer sogenannten Zugkugelkupplung ankuppelbar. Anstelle des Anhängers 300 kann aber auch ein Lastenträger an dem Kuppelkörper 13 befestigt werden.

Die Anhängekupplung 10 weist eine Fahrzeughalterung 70 zur Befestigung an dem Kraftfahrzeug 200 auf. Die Fahrzeughalterung 70 umfasst einen Querträger 71, der sich entlang eines Hecks 202 des Kraftfahrzeugs 200 erstreckt. Beispielsweise erstreckt sich der Querträger 71 zwischen dem Stoßfänger 201 und einem Heck-Abschnitt der Karosserie 203 und ist unter dem Stoßfänger 201 angeordnet derart, dass er aus einer Blickrichtung von hinten und/oder oben auf das Heck 202 des Kraftfahrzeugs 200 nicht sichtbar ist.

Der Querträger 71 weist eine obere Wand 72, eine dieser gegenüberliegende untere Wand 73 sowie Seitenwände 74 und 75 auf, die sich zwischen den Wänden 72 und 73 erstrecken, wobei die Seitenwand 74 dem Heck 202 gegenüberliegt und die Seitenwand 75 vom Heck 202 abgewandt ist, wenn die Fahrzeughalterung 70 an der Karosserie 203 befestigt ist. Der Querträger 71 ist ein Rohrkörper, d.h. die Wände 72, 73, 74 und 75 umschließen einen Hohlraum 76A.

Beispielsweise weist der Querträger 71 oder Rohrkörper 76 einen im Wesentlichen rechteckigen oder quadratischen Querschnitt auf oder eine im Wesentlichen rechteckige oder quadratische Außenumfangskontur.

Der Querträger 71 ist mit Seitenträgern 77A, 77B der Fahrzeughalterung 70 an der Karosserie 203 befestigt oder befestigbar. Die Seitenträger 77A, 77B sind im Wesentlichen baugleich, jedoch vorzugsweise spiegelsymmetrisch aufgebaut.

Die Seitenträger 77A, 77B umfassen Montagewände 78, die zur Montage am Heck 202 der Karosserie 203 vorgesehen sind und Befestigungsbereiche 78A bilden. Die Montagewände 78 weisen beispielsweise Schrauböffnungen oder Durchstecköffnungen für Schrauben 79 auf, die mit der Karosserie 203 oder dort angeordneten Halterungen oder Schraubaufnahmen verschraubbar sind.

Von der Montagewand 78 steht eine Stützwand 80 winkelig ab, die den Querträger 71 hält. Die Stützwand 80 bildet einen Befestigungsort 81 für den Querträger 71, so dass dieser fest am jeweiligen Seitenträger 77A, 77B gehalten ist. Zwischen der Stützwand 80 um der Montagewand 78 sind Verstärkungswände 82, 83 und 84 vorgesehen, die die Montagewand 78 und die Stützwand 80 steif miteinander verbinden. Beispielsweise erstreckt sich die Verstärkungswand 83 etwa parallel zur Stützwand 80 und erstreckt sich die Verstärkungswand 84 etwa rechtwinkelig zur Montagewand 78. Zwischen der Montagewand 78 und der Verstärkungswand 82 ist die Verstärkungswand 84 vorgesehen. Die Verstärkungswände 82, 83 und 84 sind vorzugsweise miteinander verschweißt und/oder anderweitig stoffschlüssig verbunden. Somit bilden die Seitenträger 77A, 77B steife Strukturen, die den Rohrkörper 76 oder Querträger 71 sozusagen steif halten.

Der Rohrkörper 76 oder Querträger 71 kann also prinzipiell zwischen den ihn an seinen Längsenden steif und/oder fest haltenden Seitenträgern 77A, 77B schwingen. Das wird im Detail noch deutlicher.

Etwa mittig am Querträger 71 ist die Lagerbasis 23 angeordnet. Die Lagerbasis 23 ist anhand einer Befestigungseinrichtung 20 an der Fahrzeughalterung 70, insbesondere dem Querträger 71 befestigt. Beispielsweise sind an dem Querträger 71 Tragelemente, insbesondere Haltebleche, 85 und 86 angeordnet, zwischen denen ein Befestigungsabschnitt 21 der Befestigungseinrichtung 20 gehalten ist. Beispielsweise sind an dem Befestigungsabschnitt 21 Schraubaufnahmen 22 für Schrauben vorgesehen, mit denen der Befestigungsabschnitt 21 mit den Tragelementen oder Halteblechen 85 und 86 verschraubt ist. Die Tragelemente oder Haltebleche 85, 86 sind beispielsweise mit dem Querträger 71 verschweißt und/oder formschlüssig verbunden. Beispielsweise weist das Tragelement oder Halteblech 86 eine Durchtrittsöffnung auf, die von dem Querträger 71 oder Rohrkörper 76 durchdrungen ist.

Die Wände 72, 73, 74 und 75 des Rohrkörpers 76 begrenzen den Hohlraum 76A.

Der Kupplungsarm 11 umfasst weiterhin eine Aufnahme 18 für eine Kontakteinrichtung 19, beispielsweise eine Anhängersteckdose, zur elektrischen Energieversorgung eines an dem Kupplungsarm 11 befestigten Objekts, beispielsweise des Anhängers 300 oder Lastenträgers. Von der Kontakteinrichtung 19 führt ein Kabel 19A weg, mit dem die Kontakteinrichtung 19 beispielsweise an ein Bordnetz des Kraftfahrzeugs 200 angeschlossen werden kann. Das Kabel 19A ist beispielsweise am Kupplungsarm 11 entlang geführt, an diesem beispielsweise mit Kabelschellen befestigt und weiterhin am Querträger 71 entlang geführt. Beispielsweise sind am Querträger 71 Kabelschellen 19B zum Halten des Kabels 19A vorgesehen. Vom Querträger 71 steht eine Stütze 19C ab, an der das Kabel 19A befestigt ist.

Die Lagerbasis 23 ist beispielsweise in der Art einer Platte ausgestaltet.

Die Lagerbasis 23 umfasst ein Schwenklager 24. Das Schwenklager 24 umfasst eine Lagerwelle 25, die vor eine Stirnfläche 27 der Lagerbasis 23 vorsteht. Die Lagerwelle 25 ist beispielsweise als eine Hohlwelle ausgestaltet. Der Stirnfläche 27 liegt eine Stirnfläche 31 des Kupplungsarmträgers 30 gegenüber. Die Stirnflächen 27, 31 sind beispielsweise ringförmig, insbesondere kreisringförmig.

Der Kupplungsarmträger 30 und somit der Kupplungsarm 11 ist bezüglich der Lagerbasis 23 anhand des Schwenklagers 24 um eine Schwenkachse S schwenkbar zwischen einer zum Anhängen des Anhängers 300 oder alternativ zum Ankoppeln eines Lastenträgers 301 vorgesehenen Gebrauchsstellung G und einer Nichtgebrauchsstellung N gelagert. In der Nichtgebrauchsstellung N ist der Kupplungsarm 11 beispielsweise näher zu einem Stoßfänger 201 des Kraftfahrzeugs 200 hin verstellt, insbesondere unter und/oder hinter den Stoßfänger 201 verstellt. In der Gebrauchsstellung G hingegen steht der Kupplungsarm 11 nach hinten vor den Stoßfänger 201 vor.

Die Lagerwelle 25 erstreckt sich entlang der Schwenkachse S und greift in eine Lageraufnahme 32 des Kupplungsarmträgers 30 ein.

Der Kupplungsarmträger 30 ist anhand der Lagerwelle 25 um die Schwenkachse S zwischen den Gebrauchsstellung G und der Nichtgebrauchsstellung N schwenkbar. Prinzipiell wäre es möglich, dass der Kupplungsarmträger 30 um die Lagerwelle 25 schwenkt. Vorliegend ist vorgesehen, dass die Lagerwelle 25 an einer Lageraufnahme 26 der Fahrzeughalterung 20, insbesondere der Lagerbasis 23, schwenkbar um die Schwenkachse S gelagert ist. Wenn also der Kupplungsarmträger 30 drehfest mit der Lagerwelle 25 verbunden ist, führt eine Drehung der Lagerwelle 25 zu einer Drehung des Kupplungsarmträgers 30.

Weiterhin ist der Kupplungsarmträger 30 entlang der Schwenkachse S verschieblich bezüglich der Lagerbasis 23, wobei diese Verschieblichkeit dazu dient, Formschlusselemente 41 und Gegen-Formschlusselemente 42 einer Fixiereinrichtung 40 außer Eingriff zu bringen oder in Eingriff zu bringen. Beispielsweise ist der Kupplungsarmträger 30 an der Lagerwelle 25 entlang der Schwenkachse S verschieblich gelagert.

In einer Lösestellung L sind die Formschlusselemente 41 außer Eingriff mit den Gegen-Formschlusselementen 42, während sie in einer Fixierstellung F in Eingriff mit denselben sind. In der Fixierstellung F ist der Kupplungsarmträger und somit der Kupplungsarm 11 bezüglich der Lagerbasis 23 fixiert, nämlich schwenkfest bezüglich der Schwenkachse S und unverschieblich bezüglich einer Längsverschiebung entlang der Schwenkachse S. In der Nichtgebrauchsstellung N und der Gebrauchsstellung G ist der Kupplungsarmträger 30 anhand der Fixiereinrichtung 40 in die Fixierstellung F verstellbar, während in Zwischenstellungen zwischen der Gebrauchsstellung G und der Nichtgebrauchsstellung N die Formschlusselemente 41 und die Gegen-Formschlusselemente 42 in der Lösestellung sind, so dass der Kupplungsarmträger 30 um die Schwenkachse S drehbar bezüglich der Lagerbasis 23 oder Fahrzeughalterung 20 ist.

Die Formschlusselemente 41 und die Gegen-Formschlusselemente 42 können in einer Ausführungsform der Erfindung beispielsweise als Kugeln und Kugelkalotten ausgestaltet sein. Es sind aber auch andere Geometrien möglich, was nachfolgend noch deutlicher wird. Beispielsweise können Formschlusselemente 41A eine kugelige Gestalt aufweisen, die in entsprechend kugelige Gegen-Formschlusselemente 42A eingreifen können. Formschlusselemente 41B und 41C können beispielsweise etwa rundoval in ihrer Kontur sein oder elliptisch und greifen in zu ihnen formschlüssig passend geformte Gegen-Formschlusselemente 42B und 42C in der Fixierstellung Fein.

Zur Verstellung der Fixiereinrichtung 40 zwischen der Lösestellung L und der Fixierstellung F dient ein Fixierantrieb 50. Der Fixierantrieb 50 bildet gleichzeitig einen Löseantrieb, was nachfolgend noch deutlicher wird. Der Fixierantrieb 50 umfasst einen Antriebskörper 51, beispielsweise einen bolzenförmigen Antriebskörper oder Sperrbolzen 51A. Der Antriebskörper 51 ist in einem Führungskanal 53 zwischen einer der Fixierstellung F zugeordneten Fixierlage F5 und einer der Lösestellung L zugeordneten Löselage L5 verstellbar, insbesondere linear verstellbar.

Der Antriebskörper 51 ist durch eine Feder oder Federanordnung 57 in Richtung der Fixierlage F5 belastet, die sich beispielsweise an einer Rückseite 54 des Antriebskörpers 51 sowie an einer Stützkontur 54A abstützt, die am Führungskanal 53, beispielsweise dessen vom Kupplungsarmträger 30 abgewandten Endbereich, angeordnet ist.

Der Antriebskörper 51 weist eine Antriebskontur 55 auf, die zum Antreiben von einem oder mehreren Fixierantriebskörpern 58, beispielsweise Kugeln, dient, die auf eine Antriebsgegenkontur 35 am Kupplungsarmträger 30 wirken, um den Kupplungsarmträger 30 zwischen der Lösestellung L und der Fixierstellung F zu verstellen, bei der die Formschlusselemente 41 in Eingriff mit den Gegen-Formschlusselementen 42 sind. Die Antriebskontur 55 umfasst vorzugsweise eine selbsthemmende Schrägfläche.

Der Antriebskontur 55 kann eine Stellkontur 55A vorgelagert sein, die insbesondere eine größere Steigung aufweist als die Antriebskontur 55, wobei die Stellkontur 55A dazu vorgesehen ist, die Fixierantriebskörper 58 mit einer anfänglich schnellen Bewegung in Richtung der Antriebsgegenkontur 35 zu betätigen.

Der Fixierantrieb 50 bildet auch einen Löseantrieb, indem er mit einer Antriebskontur 56 am Antriebskörper 51 Löseantriebskörper 59 antreibt, z.B. Wälzkörper oder Kugeln, die auf eine Antriebsgegenkontur 36 am Kupplungsarmträger 30 wirken, um den Kupplungsarmträger 30 aus der Fixierstellung F in die Lösestellung L zu betätigen, in der die Formschlusselemente 41 außer Eingriff mit den Gegen-Formschlusselementen 42 sind.

Die Fixierantriebskörper 58 sind beispielsweise in Durchtrittsöffnungen 28 der Lagerwelle 25 und die Löseantriebskörper 59 in Durchtrittsöffnungen 29 der Lagerwelle 25 mit einer Richtungskomponente radial zur Schwenkachse S aufgenommen.

Der Antriebskörper 51 ist zwischen der Fixierlage F5 und der Löselage L5 entlang einer Verstellbahn V5 verstellbar.

Der Kupplungsarmträger 30 ist bezüglich der Lagerbasis 23 entlang der Schwenkachse S verstellbar, wobei die Formschlusselemente 41 und die Gegen-Formschlusselemente 42 entlang einer Verstellbahn V4 verstellbar sind.

Zum Verschwenken des Kupplungsarms 11 zwischen der Gebrauchsstellung G und der Nichtgebrauchsstellung N dient ein Schwenkantrieb 61 einer motorischen Antriebseinrichtung 60. Diese Antriebseinrichtung 60 stellt zudem einen Löseantrieb 62 für den Fixierantrieb 50 bereit, der den Antriebskörper 51 aus der Fixierlage F5 in Richtung der Löselage L5 verstellen kann.

Der Schwenkantrieb 61 umfasst ein Schwenkantriebselement 63, das sich um den Außenumfang der Lagerwelle 25 erstreckt, z.B. ein Zahnrad 64.

Der Löseantrieb 62 umfasst ein Löseantriebselement 65, welches einen Mitnehmer 66 am Antriebskörper 51 betätigen kann, um diesen von der Fixierlage F5 in die Löselage L5 zu betätigen. Beispielsweise weist das Löseantriebselement 65 Schrägflächen 65A auf, an denen Mitnahmevorsprünge 66A des Mitnehmers 66 bei einer Drehung des Löseantriebselements 65 um eine Drehachse, insbesondere die Schwenkachse S, entlanggleiten, wobei die Drehbewegung des Löseantriebselements 65 in eine lineare Bewegung des Mitnehmers 66 zur Verstellung des Antriebskörpers 51 aus der Fixierlage F5 in die Löselage L5 umgelenkt wird. Der Mitnehmer 66 ist mit dem Antriebskörper 51 fest verbunden, beispielsweise anhand eines vor den Antriebskörper 51 vorstehenden Antriebsvorsprung 51B.

Zwischen den Schrägflächen 65A, die beispielsweise dachförmig oder dreieckförmig zueinander verlaufen, erstrecken sich Halteabschnitte 65B, an denen die Mitnahmevorsprünge 66A des Mitnehmers 66 in der Lösestellung L anliegen oder an denen die Mitnahmevorsprünge 66A abgestützt sind, sodass der Antriebskörper 51 über die Löseantriebskörper 59 die Formschlusselemente 41 außer Eingriff mit den Gegen-Formschlusselementen 42 hält.

Das Löseantriebselement 65 ist anhand eines Zahnrads 67 antreibbar. Das Zahnrad 67 ist beispielsweise am Außenumfang des Löseantriebselements 65 angeordnet.

Ein Antriebsmotor 90, der beispielsweise durch eine Steuerung 91 angesteuert oder ansteuerbar ist, treibt eine Abtriebswelle 92 um eine Drehachse D an. Die Steuerung 91 umfasst beispielsweise ein sogenanntes Anhängersteuergerät und/oder ein Bedienelement, insbesondere einen Bedienschalter oder Bedienknopf. Die Steuerung 91 ist vorzugsweise so ausgestaltet, dass sie den Antriebsmotor 90 so lange bestromt, bis die jeweils angesteuerte Gebrauchsstellung G oder Nichtgebrauchsstellung N erreicht ist. Die Steuerung 91 ist beispielsweise durch einen elektrischen Schalter 91A, einen Sensor oder dergleichen aktivierbar, um die nachfolgende Verstellung des Kupplungsarms 11 zwischen der Gebrauchsstellung G und der Nichtgebrauchsstellung N anzusteuern.

Der Schalter 91A kann einen Bestandteil der Steuerung 91 bilden. Der Schalter 91A kann beispielsweise ortsfest am Kraftfahrzeug 200 angeordnet sein, beispielsweise in dessen Gepäckabteil, seinem Armaturenbrett oder dergleichen. Weiterhin kann der Schalter 91A einen Bestandteil einer drahtlosen Fernsteuerung bilden, beispielsweise eines Smartphones oder eines speziellen Bediengeräts, mit dem die Steuerung 91 ansteuerbar ist.

Die Steuerung 91 weist einen Prozessor 91B, beispielsweise einen Mikroprozessor sowie einen Speicher 91C auf, in welchem ein Steuerungsprogramm 91D gespeichert ist, anhand dessen Programmcode Steuerbefehle erzeugbar sind, mit denen der Prozessor 91B den Antriebsmotor 90 ansteuert.

Der Antriebsmotor 90 kann ein Getriebe 90B, insbesondere ein Planetengetriebe, umfassen und/oder ein elektrischer Antriebsmotor sein. Der Antriebsmotor 90 treibt zweckmäßigerweise anhand des Getriebes 90B oder direkt eine Abtriebswelle 92 an, an der ein Fixier-Abtriebselement 93 und ein Schwenk-Abtriebselement 94, beispielsweise Zahnräder, drehfest angeordnet sind. Die Abtriebselemente 93, 94 kämmen mit ihren an ihrem Außenumfang angeordneten Zahnkränzen mit einem Löseantriebselement 65, das dem Fixierantrieb 50 zugeordnet ist, und einem Schwenkantriebselement 63 und treiben diese an.

Die Feder 57 sorgt dafür, dass der Fixierantrieb 50 von der Lösestellung L in Richtung der Fixierstellung F wirkt, wobei dann die Formschlusselemente 41 mit den Gegen-Formschlusselementen 42 in Eingriff gelangen und am Ende der Fixierbewegungen in Richtung der Fixierstellung F Kontaktbereiche 43 der Formschlusselemente 41 an Kontaktbereichen 44 der Gegen-Formschlusselemente 42 anliegen, insbesondere anschlagen.

Der Kupplungsarmträger 30 bildet eine Bewegungskomponente 100. Wenn die Bewegungskomponente 100 bzw. der Kupplungsarmträger 30 zwischen der Lösestellung L und der Fixierstellung F verstellt wird, bei der die Formschlusselemente 41 mit den Gegen-Formschlusselementen 42 in Eingriff sind, bilden die Formschlusselemente 41 Anschläge 101, die ein Anschlägen 102 in Gestalt der Gegen-Formschlusselemente 42 anschlagen. Dadurch werden Schwingungen angeregt, die sich über die Lagerbasis 23 weg oder von der Lagerbasis 23 ausgehend, an der die Gegen-Formschlusselemente 42 angeordnet sind, auf die Fahrzeughalterung 70 auswirken, insbesondere den Querträger 71. Der Querträger 71 in Gestalt des Rohrkörpers 76 wird dann zu den Schwingungen angeregt. Dabei übertragen sich diese Schwingungen über die Seitenträger 77A, 77B auf die Karosserie 203 des Kraftfahrzeugs 200. Sowohl der Hohlkörper 76 als auch die Karosserie 203 können dabei als Resonanzkörper oder Schallkörper wirken, die die durch das Anschlagen der Bewegungskomponente 100 in der Formschlussstellung F zu unangenehmen Frequenzen führen, beispielsweise zu Frequenzen im Bereich von 300 Hz und mehr. Derartige helle Geräusche werden von einem Nutzer der Anhängekupplung 10 bzw. des Kraftfahrzeugs 200 als unangenehm empfunden, was jedoch bei der Anhängekupplung 10 durch die nachfolgend deutlich werdenden Maßnahmen deutlich weniger relevant ist.

Weitere Geräusche beim Betrieb der Anhängekupplung 100 entstehen beispielsweise durch das Getriebe 90B und/oder den Schwenkantrieb 61 und/oder die Zahnräder 64 und/oder 67. Auch das Löseantriebselement 65 kann beim Betrieb als störend empfundene Geräusche verursachen.

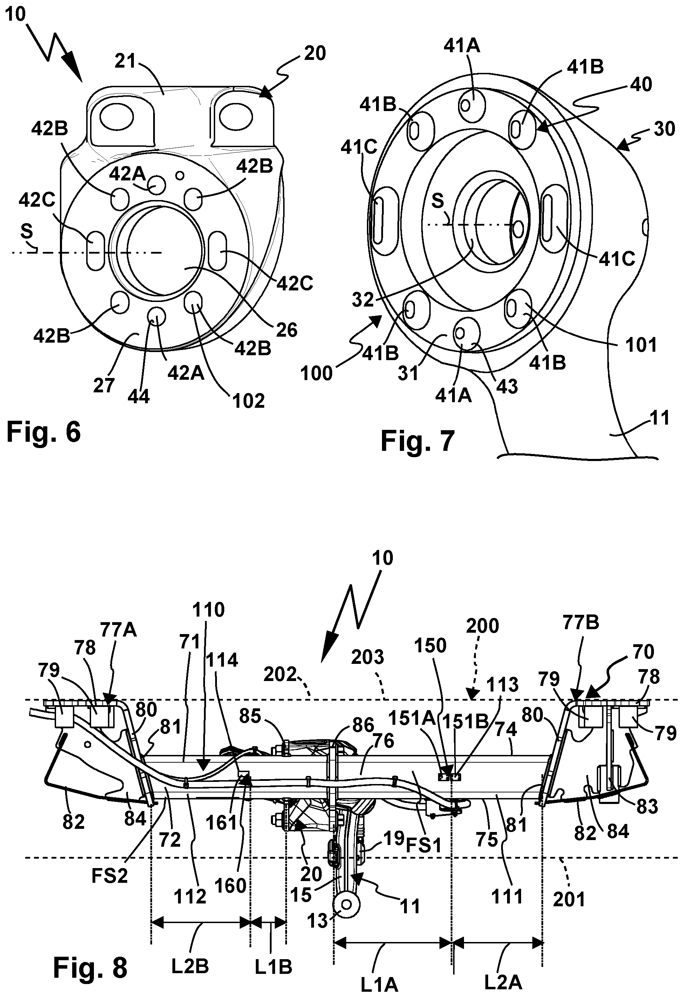

Man kann sich den Querträger 71 als eine Art Saite oder dergleichen andere schwingende Einheit vorstellen, die sozusagen zwischen die Seitenträger 77A, 77B gespannt ist. An den Befestigungsorten 81 der Seitenträger 77A, 77B ist der Querträger 71 fest gehalten, so dass er zwischen den Seitenträgern 77A, 77B schwingen kann. Jedoch bildet auch die massive und schwere Einheit bestehend aus Lagerbasis 23, Kupplungsarmträger 30, dem Kupplungsarm 11 sowie den Antriebskomponenten eine erhebliche, Schwingungen reduzierende Last, so dass man die Schwingungskomponente 110 in Abschnitte oder Teile 111 und 112 teilen kann, die sich zwischen einem jeweiligen Seitenträger 77A, 77B und dem Anbringungsort der Lagerbasis 23 erstrecken. In der Ansicht der Figur 8 oder einer von hinten auf das Heck 202 des Kraftfahrzeugs 200 gerichteten Perspektive bildet der Teil 111 einen rechten Teil 111 und der Teil 112 einen linken Teil der Schwingungskomponente 110.

Der Teilabschnitt oder Teil 111 der Schwingungskomponente 110 schwingt beispielsweise an einem nachfolgend als Anbringungsort 113 bezeichneten Ort mit einer Frequenz, die durch die Bewegungskomponente 100 hervorgerufen wird und von einem Nutzer als unangenehm empfunden wird, beispielsweise mit einer Frequenz von ungefähr 3.000 bis 3.400 Hz. Am Anbringungsort 113 hat diese Schwingungsfrequenz FS1 ihr Amplitudenmaximum. Am Anbringungsort 113 hat beispielsweise die obere Wand 72 des Querträgers 71 ihre maximale Auslenkung bei der Schwingungsfrequenz FS1.

An einem nachfolgend als Anbringungsort 114 bezeichneten Ort hingegen hat die Schwingungskomponente 110 an ihrem linken Teil oder Teilabschnitt 112 eine weitere, ebenfalls als unangenehm empfundene Schwingungsfrequenz FS2 mit maximaler Auslenkung oder maximaler Amplitude. Auch diese Frequenz überträgt sich ggf. auf die Karosserie 203 des Kraftfahrzeugs 200 und wird als eventuell störend empfunden.

Der Anbringungsort 113 ist beispielsweise anhand einer Finite-Elemente-Berechnung ermittelbar. Beispielsweise hat der Anbringungsort 113 einen ersten Längsabstand L1A zu Lagerbasis 23, insbesondere zu dem die Lagerbasis 23 tragenden Tragelement 86, und einen zweiten Längsabstand L2A zu dem Befestigungsort 81 des Seitenträgers 77B, der den rechten Teil oder Teilabschnitt 111 des Querträgers 71 oder der Schwingungskomponente 110 hält.

Der Anbringungsort 114 hingegen weist einen ersten Längsabstand L1B zu der Lagerbasis 23, insbesondere zu dem Tragelement oder Halteblech 85 und einen zweiten Längsabstand L2B zu dem vom Heck 202 des Kraftfahrzeugs 200 zu dem Befestigungsort 81 des Seitenträgers 77A.

Man erkennt, dass die ersten Längsabstände L1A und L1B ebenso wie die zweiten Längsabschnitte L2A und L2B und auch die Verhältnisse zwischen den Längsabständen L1A und L2A bzw. L1B und L2B verschieden sein können. Es kommt also im Einzelnen darauf an, wo die Amplitude der als unangenehm empfundenen Frequenz an der jeweiligen Schwingungskomponente 110 maximal ist, um die nachfolgend erläuterten Schwingungsdämpferanordnungen 150 und 160 optimal einzusetzen.

Am Anbringungsort 113 ist beispielsweise die Schwingungsdämpferanordnung 150 vorgesehen. Diese weist Dämpferelemente 151A, 151B auf. Die Dämpferelemente 151A, 151B sind identisch. Jedes weist einen Dämpferkörper 152 sowie ein Befestigungsmittel 153 auf. Die Dämpferkörper 152 sind Dämpferkörper mit geringem Gewicht, beispielsweise Auswuchtgewichte, wie man sie zur Auswuchtung von Fahrzeugrädern kennt. Beispielsweise ist das Gewicht der Dämpferkörper 152 etwa in einem Bereich von 5gr, 10gr oder 20gr. Demgegenüber ist der Querträger 71 sehr schwer und wiegt beispielsweise 10kg, 15kg, 20kg oder mehr. Wenn also die Dämpferkörper 152 stoffschlüssig fest, beispielsweise anhand einer Verschweißung oder dergleichen, an der Schwingungskomponente 110 befestigt werden, würde sich das Gewicht der Dämpferkörper 152 nur minimal auswirken, was zu einer minimalen Auswirkung auf die Schwingungsfrequenz FS1 führen würde.

Daher sind die Dämpferkörper 152 mit Befestigungsmitteln 153 zwar stoffschlüssig an der Schwingungskomponente 110 befestigt, jedoch mit einem gewissen Bewegungsspiel.

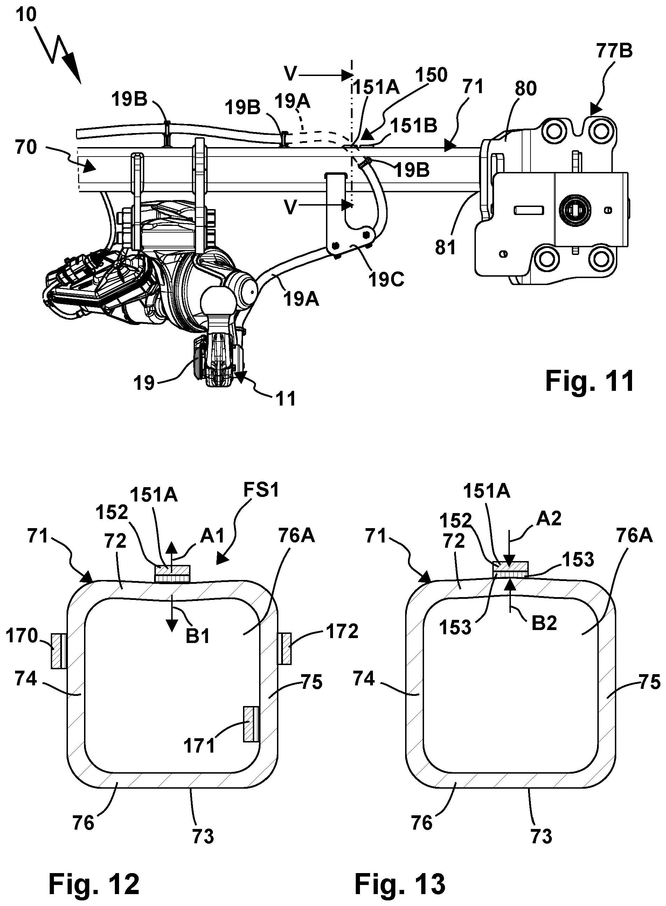

Somit können die Dämpferkörper 152 wie in den Figuren 12 und 13 dargestellt gegensinnige Bewegungen machen. Beispielsweise bewegt sich die obere Wand 72 in der Schwingungsphase gemäß Figur 12 in Richtung des Hohlraums 76A (als Bewegung B1 eingezeichnet), während sich der Dämpferkörper 152 sich mit einer Bewegung A1 vom Hohlraum 76A bzw. von der oberen Wand 72 weg bewegt.

In einer darauffolgenden Phase der Schwingung FS1 hingegen (wie in Figur 13 gezeigt) bewegen sich die obere Wand 72 und der Dämpferkörper 152 aufeinander zu, nämlich mit Bewegungen B2 und A2.

Diese gegensinnigen Bewegungen wirken im Sinne einer Dämpfung. Die obere Wand 72 schlägt also quasi an dem Dämpferkörper 152 an. Das elastische Befestigungsmittel 152, beispielsweise ein doppelseitiges Klebeband, ein Gummimaterial oder dergleichen anderer elastischer Kunststoff, poröser Kunststoff oder dergleichen, ermöglicht jedenfalls die Relativbewegung des Dämpferkörpers 152 zur Schwingungskomponente 110, insbesondere deren obere Wand 72.

Die Schwingungsdämpferanordnung 160 macht deutlich, dass nicht in jedem Fall mehrere Dämpferelemente notwendig sind. Beispielsweise umfasst die Schwingungsdämpferanordnung 160 nur ein einziges Dämpferelement 161, welches wie eines der Dämpferelemente 151A oder 151B ausgestaltet sein kann. Beispielsweise ist das Dämpferelement 161 gleich schwer wie eines der Dämpferelemente 151. Es ist aber auch möglich, dass das Dämpferelement 161 etwas schwerer ist als ein einzelnes der Dämpferelemente 151. Beispielsweise kann das Dämpferelement 161 20 Gramm wiegen, während ein Dämpferelement 151 10 Gramm wiegt.

Zur Verdeutlichung, dass auch an anderen Stellen der Schwingungskomponente 110 Schwingungsdämpferanordnungen vorgesehen sein können, sind beispielhaft in Figur 12 an den Seitenwänden 74 und 75 jeweils Dämpferelemente eingezeichnet, nämlich ein Dämpferelement 170 an der Seitenwand 74 und Dämpferelemente 171, 172 an der Seitenwand 75.

Dämpferelemente können auch in Innenräumen und müssen nicht zwingend an Außenumfangskonturen einer jeweiligen Schwingungskomponente angeordnet sein, wobei dort zwar die Befestigung leichter gelingt als in Innenräumen. Es ist möglich, dass beispielsweise wie am Beispiel des Dämpferelements 171 verdeutlicht, Dämpferelemente auch in einem Innenraum einer Schwingungskomponente, so z.B. im Hohlraum 76A, angeordnet sein können. Zur Anbringung derartiger Dämpferelemente können Aussparungen oder dergleichen an einer Schwingungskomponente vorgesehen sein, durch die hindurch ein Dämpferelement an der Schwingungskomponente in einen Innenraum einbringbar ist.

Beispielhaft ist auch an einem der Seitenträger 77 ein Dämpferelement 180 eingezeichnet, welches beispielsweise wie die Dämpferelemente 170, 171 oder 172 ausgestaltet sein kann. Das Dämpferelement 180 kann beispielsweise dazu dienen, vom Querträger 71 ausgehende Schwingungen zu dämpfen oder zu minimieren derart, dass sie nicht oder in geringerem Umfang auf die Karosserie 203 übertragen werden.

Des Weiteren ist auch eine Dämpfung beispielsweise direkt an dem Kupplungsarm 11 vorteilhaft möglich. Beispielsweise können Dämpferelemente 185 an dem Außenumfang des Kupplungsarmes 11, insbesondere dem Armabschnitt 15, angeordnet sein, die beispielsweise wie die Dämpferelemente 170, 171 oder 172 ausgestaltet sein können.

Ein weiteres Dämpferelement 190 in der Art der Dämpferelemente 170, 171 oder 172 ist beispielsweise an der Lagerbasis 23, z.B. einem unter anderem das Zahnrad 67 aufnehmenden Getriebegehäuse 23A, angeordnet und dient zur Dämpfung oder Reduzierung von Schwingungen, die beispielsweise vom Antriebsmotor 90 oder dessen Getriebe 90B und oder von dem Schwenkantrieb 61, insbesondere dem Zahnrad 64 oder auch vom Löseantrieb oder dem Zahnrad 67 erzeugt werden.

Die Dämpferelemente 180,185 und 190 dienen insbesondere zur Dämpfung von Schwingungen mit hohen Frequenzen, beispielsweise in einem Bereich von mehr als 1000 Hz, noch weiter bevorzugt mehr als 1500 Hz oder 2000 Hz und/oder von Schwingungen, die von einem Nutzer als unangenehm empfunden werden.

## Patentansprüche

1. Anhängekupplung (10) für ein Kraftfahrzeug (200), mit einem Kupplungsarm (11) zum Ankuppeln eines Anhängers oder eines Hecklastenträgers, mit einer an dem Kraftfahrzeug (200) befestigbaren oder befestigten Fahrzeughalterung (70), die eine Lagerbasis (23) aufweist, an der der Kupplungsarm (11) angeordnet oder anordenbar ist, wobei die Anhängekupplung (10) mindestens eine mechanisch bewegliche Bewegungskomponente (100) aufweist, wobei die Bewegungskomponente (100) insbesondere einen Bestandteil einer Fixiereinrichtung (40) zur ortsfesten Fixierung des Kupplungsarmes (11) bezüglich der Fahrzeughalterung (70) und/oder eines Lagers und/oder Antriebs zum Verstellen des Kupplungsarmes (11) bezüglich der Lagerbasis (23) zwischen einer zum Anhängen eines Anhängers geeigneten Gebrauchsstellung (G) und einer für den Nichtgebrauch des Kupplungsarmes (11) vorgesehenen Nichtgebrauchsstellung (N) bildet, wobei die Bewegungskomponente (100) bei ihrer Bewegung mindestens eine Komponente der Anhängekupplung (10) zu akustische Wellen erzeugenden Schwingungen anregt, sodass diese Komponente eine Schwingungskomponente (110) bildet, **dadurch gekennzeichnet, dass** an einem Anbringungsort (113, 114) der Schwingungskomponente (110) eine Schwingungsdämpferanordnung (150, 160) mit mindestens einem Dämpferelement (151A, 151B, 161) zur Dämpfung der Schwingungen in Bezug auf mindestens eine Schwingungsfrequenz (FS1, FS2) angeordnet ist.

2. Anhängekupplung (10) nach Anspruch 1, **dadurch gekennzeichnet, dass** das mindestens eine Dämpferelement (151A, **151B,** 161) einen von der Schwingungskomponente (110) separaten Dämpferkörper (152) umfasst, der anhand eines Befestigungsmittels (153) an der Schwingungskomponente (110) befestigt ist.

3. Anhängekupplung (10) nach Anspruch 2, **dadurch gekennzeichnet, dass** das Befestigungsmittel (153) eine Relativbewegung des mindestens einen Dämpferkörpers (152) und der Schwingungskomponente (110) ermöglicht und/oder weicher als der Dämpferkörper (152) und/oder die Schwingungskomponente (110) im Bereich des Anbringungsorts (113, 114) ist und/oder dass das Befestigungsmittel (153) ein Klebemittel, insbesondere ein doppelseitiges Klebeband, und/oder einen porösen und/oder elastischen Kunststoff und/oder ein Federelement und/oder einen Magneten umfasst oder dadurch gebildet ist.

4. Anhängekupplung (10) nach einem der vorhergehenden Ansprüche, **dadurch gekennzeichnet, dass** das mindestens eine Dämpferelement (151A, 151B, 161), insbesondere der Dämpferkörper (152), Metall und/oder Keramik aufweist oder daraus besteht.

5. Anhängekupplung (10) nach einem der vorhergehenden Ansprüche, **dadurch gekennzeichnet, dass** der Anbringungsort (113, 114) der Schwingungsdämpferanordnung (150, 160), insbesondere des mindestens einen Dämpferelements (151A, 151B, 161), in einem Bereich der Schwingungskomponente (110) liegt, an dem die Schwingungskomponente (110) in Bezug auf die mindestens eine durch das mindestens eine Dämpferelement (151A, 151B, 161) gedämpfte Schwingungsfrequenz (FS1, FS2) eine maximale Amplitude aufweist.

6. Anhängekupplung (10) nach einem der vorhergehenden Ansprüche, **dadurch gekennzeichnet, dass** die durch die Schwingungsdämpferanordnung (150, 160), insbesondere das mindestens eine Dämpferelement (151A, 151B, 161), gedämpfte Schwingungsfrequenz (FS1, FS2) eine Eigenfrequenz der Schwingungskomponente (110), insbesondere eine Eigenfrequenz an dem Anbringungsort (113, 114) des Dämpfungselements, ist.

7. Anhängekupplung (10) nach einem der vorhergehenden Ansprüche, **dadurch gekennzeichnet, dass** der Anbringungsort (113, 114) zwischen der Lagerbasis (23) und einem Befestigungsort (81) der Schwingungskomponente (110), an dem die Schwingungskomponente (110) ortsfest gehalten ist, liegt, wobei der Befestigungsort (81) vorzugsweise ein zur Montage an dem Kraftfahrzeug (200) vorgesehener Befestigungsbereich der Fahrzeughalterung (70) oder ein zur Befestigung an dem Kraftfahrzeug (200) vorgesehener Seitenträger (77A, 77B) ist, wobei die Schwingungsdämpferanordnung (150, 160), insbesondere das mindestens eine Dämpferelement (151A, 151B, 161), einen ersten Längsabstand (L1A, L1B) zu der Lagerbasis (23) und einen zweiten Längsabstand (L2A, L2B) zu dem Befestigungsort (81) aufweist, wobei die Längsabstände (L1A, L2A,L1B, L2B) ungefähr gleich sind oder sich um maximal 50 %, insbesondere maximal 40 %, noch weiter bevorzugt maximal 30 % oder 20 % voneinander unterscheiden.

8. Anhängekupplung (10) nach einem der vorhergehenden Ansprüche, **dadurch gekennzeichnet, dass** ein Eigengewicht der Schwingungskomponente (110) mindestens das 100-fache, vorzugsweise mindestens das 200-fache, noch weiter bevorzugt mindestens das 300-fache oder 400-fache, noch weiter bevorzugt mindestens das 700-fache, 800-fache oder 900-fache, noch weiter bevorzugt mindestens das Tausendfache eines Eigengewichts der Schwingungsdämpferanordnung (150, 160) als Ganzes oder eines oder mehrerer oder aller Dämpferelemente (151A, 151B, 161) der Schwingungsdämpferanordnung (150, 160), insbesondere des Dämpferkörpers (152) eines Dämpferelements (151A, 151B, 161) oder der Dämpferkörper (152) mehrerer oder aller Dämpferkörper (152), beträgt.

9. Anhängekupplung (10) nach einem der vorhergehenden Ansprüche, **dadurch gekennzeichnet, dass** das mindestens eine Dämpferelement (151A, 151B, 161), insbesondere der Dämpferkörper (152), eine Flachgestalt und/oder kubische Gestalt aufweist und/oder streifenförmig ist und/oder dass das mindestens eine Dämpferelement (151A, 151B, 161) in der Art eines Wuchtgewichts für Fahrzeugräder ausgestaltet ist oder durch ein Wuchtgewicht für Fahrzeugräder gebildet ist.

10. Anhängekupplung (10) nach einem der vorhergehenden Ansprüche, **dadurch gekennzeichnet, dass** die Schwingungsdämpferanordnung (150, 160), insbesondere das mindestens eine Dämpferelement (151A, 151B, 161), nur einen Teilbereich einer Oberfläche der Schwingungskomponente (110) überdeckt.

11. Anhängekupplung (10) nach einem der vorhergehenden Ansprüche, **dadurch gekennzeichnet, dass** der durch die Schwingungsdämpferanordnung (150, 160), insbesondere das mindestens eine Dämpferelement (151A, 151B, 161), überdeckte Teilbereich maximal 20 %, noch weiter maximal 10 %, noch weiter maximal 5 %, noch weiter maximal 2 % oder ein Prozent der Oberfläche der Schwingungskomponente (110) beträgt.

12. Anhängekupplung (10) nach einem der vorhergehenden Ansprüche, **dadurch gekennzeichnet, dass** die Schwingungsdämpferanordnung (150, 160), insbesondere das mindestens eine Dämpferelement (151A, 151B, 161), sich in Bezug auf eine Außenumfangslänge oder Außenumfangskontur eines Außenumfangs der Schwingungskomponente (110) an dem Anbringungsort (113, 114) nur zu maximal 20 %, noch weiter bevorzugt maximal 15 %, noch weiter bevorzugt maximal 10 %, noch weiter bevorzugt maximal 5 % der gesamten Außenumfangslänge oder Außenumfangskontur der Schwingungskomponente (110) an dem Anbringungsort (113, 114) erstreckt.

13. Anhängekupplung (10) nach einem der vorhergehenden Ansprüche, **dadurch gekennzeichnet, dass** die Schwingungsdämpferanordnung (150, 160), insbesondere das mindestens eine Dämpferelement (151A, 151B, 161), ausschließlich zum Zweck der Dämpfung der Schwingungen an der Schwingungskomponente (110) angeordnet ist.

14. Anhängekupplung (10) nach einem der vorhergehenden Ansprüche, **dadurch gekennzeichnet, dass** die Schwingungskomponente (110) ein Hohlkörper und/oder ein Rohrkörper (76) ist und/oder einen Hohlraum (76A) aufweist und/oder dass die Schwingungskomponente (110) eine Komponente der Fahrzeughalterung (70), insbesondere ein die Lagerbasis (23) tragender Querträger (71) oder zur Anbringung an einer Karosserie (203) des Kraftfahrzeugs (200) vorgesehener und/oder ausgestalteter Längsträger oder Seitenträger (77A, 77B), ist und/oder ein Getriebegehäuse (23A) oder der Kupplungsarm (11) ist.

15. Anhängekupplung (10) nach einem der vorhergehenden Ansprüche, **dadurch gekennzeichnet, dass** die durch die Schwingungsdämpferanordnung (150, 160), insbesondere das mindestens eine Dämpferelement (151A, 151B, 161), gedämpfte Schwingungsfrequenz (FS1, FS2) mehr als 1000 Hz, vorzugsweise größer als 1500 Hz, noch weiter bevorzugt größer als 2000 Hz, noch weiter bevorzugt größer als 2500 Hz oder 3000 Hz, insbesondere größer als 3100 Hz oder 3200 Hz ist, insbesondere etwa 3400 Hz beträgt und/oder dass die Bewegungskomponente (100) die Schwingungen und/oder die mindestens eine Schwingungsfrequenz (FS1, FS2) bei einem Anschlagen an einem Anschlag (101, 102) erzeugt.
